# EUROPÄISCHE PATENTSCHRIFT

(11) **EP 2 267 361 B1**
(45) Veröffentlichungstag und Bekanntmachung des Hinweises auf die Patenterteilung: **29.07.2015**
(21) Anmeldenummer: 10006408.8
(22) Anmeldetag: 21.06.2010
(51) Int. Cl.: F21V 29/00, F21V 23/04, H05K 1/02, F21Y 101/02

(54) **Leuchtmodul**
Lighting module
Module d'éclairage

(30) Priorität: 23.06.2009 DE 102009030232; 20.11.2009 DE 202009015826 U; 08.04.2010 DE 102010014241
(43) Veröffentlichungstag der Anmeldung: 29.12.2010
(73) Patentinhaber: Steinel GmbH, 33442 Herzebrock (DE)
(72) Erfinder: Berheide, Herwig, 33442 Herzebrock (DE); Möller, Thomas, 32049 Herford (DE); Sehlhoff, Stefan, 33442 Herzebrock-Clarholz (DE); Wolff, Markus, 59510 Lippetal (DE)
(74) Vertreter: Behrmann, Niels

(56) Entgegenhaltungen:
- DE-A1- 4 107 312
- DE-U1-202007 018 021
- US-A- 5 803 589
- US-A1- 2006 028 821
- US-A1- 2007 081 340

## Beschreibung

Dieses Problem wird dadurch weiter verschärft, dass häufig derartigen kompakten Leuchten, die eine Vielzahl von (Leistungs-) LEDs integriert aufweisen, Sensoreinheiten zugeordnet sind, welche etwa eine Bewegungssteuerung der Leuchtmittel vornehmen. Offensichtlich ist bereits das thermische Problem bei der Verwendung von (prinzipbedingt wärmeempfindlichen) Infrarot-Sensoren, für welche eine Eigenwärmeentwicklung des jeweils zu steuernden Leuchtmittels beachtliche konstruktive und Konfigurationsprobleme bringt. Auch existiert dieses Problem bei sogenannten Hochfrequenz- bzw. Radarsensoren, welche gegenüber Infrarot-Sensoren den Vorteil aufweisen, etwa zusammen mit dem Leuchtmittel hinter einem Leuchtenschirm, damit von außen unsichtbar, vorgesehen sein zu können, da das hochfrequente Sensorsignal typische Materialien eines solchen Schirms, etwa eine Glasfläche, durchdringt.

Hier entsteht jedoch das Problem, dass, durch die Abwärme der integriert vorgesehenen Mehrzahl von LED-Leuchtmitteln, typischerweise eine sehr hohe Innentemperatur im Inneren des Leuchtenschirms vorliegt, welche sich nachteilig auf das Detektionsverhalten eines Hochfrequenz-Bewegungssensors auswirkt, insbesondere dessen Hochfrequenzcharakteristik (durch entsprechende thermische Empfindlichkeit der benötigten Hochfrequenz-Bauelemente) kritisch und oft in unberechenbarer Weise beeinflusst. Somit entsteht gerade bei integrierten Leuchteneinheiten, welche möglichst kompakt LED-Leuchtmittel einsetzen und einen zugeordneten Hochfrequenz-Sensor aufweisen, die Herausforderung, eine wirksame Kühlung und Wärmeabfuhr im (Leuchten-) Gehäuseinneren zu ermöglichen, um einen fehlerfreien Leuchten- und Sensorbetrieb der Vorrichtung zu gewährleisten.

Aus der US 2007/081340 A1 ist eine Leiterplatte mit metallisierten Flächenabschnitten und einer Mehrzahl von randseitig und in Eckbereichen angeordneten Leistungs-LEDs bekannt, die mit dem metallsierten Flächenabschnitten so zusammenwirken, dass die Flächenabschnitte als Kühlfläche ein Betriebswärmeabfluss bewirken.

### Leuchtmodul

Die vorliegende Erfindung betrifft ein Leuchtmodul mit einer Leiterplatte, welche als Leuchtmittelträger mit einer Mehrzahl von Halbleiter-Leuchtmitteln ausgebildet ist und entsprechend Einsatz in zugehörigen Leuchten findet.

Insbesondere in der modernen Leuchtentechnologie kommen halbleiterbasierte Leuchtmittel, insbesondere in Form von Leistungs-LEDs (wobei als Leistungs-LED eine LED verstanden werden soll, welche eine elektrische Leistungsaufnahme von mehr als einem Watt aufweist) zunehmend häufig zum Einsatz, wobei neben schnellem Schaltverhalten und dem oftmals gewünschten punktförmigen Lichtquellencharakter die hohe Lichtausbeute als Vorteil ausgenutzt wird; damit verbunden ist eine im Vergleich etwa zu Glühlampen deutlich geringere, bei Leuchten häufig unerwünschte Wärmeentwicklung.

Aus diesen Gründen eignen sich LED-Leuchtmittel auch gut für kompakte, integrierte Leuchtenanordnungen, wobei zur Realisierung einer ausreichenden Lichtstärke üblicherweise eine Mehrzahl von Leistungs-LEDs, typischerweise auf einem planen gemeinsamen Träger, etwa einer Leiterplatte, zum Einsatz kommt. Das Vorsehen einer Leiterplatte als Träger bietet dann zusätzlich die Möglichkeit, die zum Ansteuern der Halbleiter-Leuchtmittel benötigte Peripherieelektronik zu integrieren, so dass eine solche Vorgehensweise insbesondere auch unter Aspekten einer kostengünstigen Großserienfertigung bevorzugt ist.

Allerdings lässt sich auch bei der Verwendung von (Leistungs-) LEDs eine Integration zu kompakten, häufig auch ästhetisch anspruchsvollen Leuchten nicht beliebig forcieren, da auch Leistungs-LEDs bei voller Aussteuerung nicht unbeträchtliche Wärmeentwicklung zeigen, welche dann oftmals umständlich von der existierenden Leiterplattenanordnung (nach entsprechender, oftmals schwieriger thermischer Ankopplung) abgeführt werden muss.

Aufgabe der vorliegenden Erfindung ist es daher, ein gattungsgemäßes Leuchtmodul, als Leuchtmittelträger mit einer Mehrzahl von Halbleiter-Leuchtmitteln auf einer Leiterplatte so zu verbessern, dass diese einerseits eine Mehrzahl von Halbleiter-Leuchtmitteln, insbesondere Leistungs-LEDs, tragen und wirksam ansteuern kann, gleichzeitig für eine in kompakter Weise an oder auf der Leiterplatte vorzusehende Hochfrequenz-Sensoreinheit thermische Voraussetzungen (durch entsprechende wirksame Wärmeabfuhr von den LED-Leuchtmitteln) zu schaffen, dass ein störungsfreier Sensorbetrieb gewährleistet ist.

Die Aufgabe wird durch das Leuchtmodul mit den Merkmalen des Hauptanspruchs gelöst; vorteilhafte Weiterbildungen der Erfindung sind in den Unteransprüchen beschrieben, so dass mit der vorliegenden Erfindung die Voraussetzungen für kompakte, gleichwohl thermisch optimierte Leuchten und Leuchteneinheiten geschaffen sind.

Damit eignet sich die vorliegende Erfindung insbesondere zur Realisierung der in der deutschen Gebrauchsmusteranmeldung 20 2009 015 826 der Anmelderin beschriebenen Leuchte.

In erfindungsgemäß vorteilhafter Weise ist die Leiterplatte -- bevorzugt mit zwei metallisierten Leiterplattenoberflächen zum Ausbilden von jeweiligen Leiterplattenflächen bzw. Leiterbahnen -- vieleckig, bevorzugt rechteckig, weiter bevorzugt quadratisch, so ausgebildet, dass in den Eckbereichen etwa eines Rechtecks oder Quadrats Leistungs-Halbleiterleuchtmittel vorgesehen sein können. Um insoweit erfindungsgemäß eine optimierte Wärmeabfuhr von den Leuchtmitteln zu ermöglichen, werden Bereiche der metallisch - kaschierten Oberfläche der Leiterplatte als metallisierte Flächenabschnitte und Kühlflächen im Sinne der Erfindung benutzt, um die Betriebswärme der Halbleiter-Leuchtmittel abzuführen, wobei geeignete Wärmeleitelemente, etwa weiterbildungsgemäß vorgesehene flächige Reflektorelemente (Reflektorbleche) an oder auf diese metallisierten Flächenabschnitte (ggf. unter Zwischenschaltung von mechanischen Komponenten oder geeigneter Wärmeleitpaste oder dergleichen) gebracht werden können.

Insbesondere im Fall einer rechteckigen bzw. quadratischen Leiterplatte sind diese metallisierten Flächenabschnitte zur Wärmeabfuhr randseitig vorgesehen, weiter bevorzugt randseitig umlaufend, so dass ein zur Wärmeabfuhr maximierter Bereich der Leiterplatte für diese thermische Aufgabe zur Verfügung steht.

Dabei ist erfindungsgemäß vorgesehen, mittig bzw. zentrisch auf bzw. in der Leiterplatte einen Flächenbereich bzw. Durchbruch für ein als Modul vorhandenes, bevorzugt auf einer eigenen, gegenüber der Leiterplatte verkleinerten Sensor-Lederplatte aufgebaute Sensoreinheit vorzusehen, so dass bereits räumlich Innerhalb der Leiterplattengeometrie ein Abstand von (in etwa den Ecken der Leiterplatte sitzenden) Halbleiter-Leuchtmitteln zum mittigen Sensor maximiert ist.

Geometrisch lässt sich zudem eine wirksame Fläche der erfindungsgemäß als Kühlfläche und Kontaktfläche für Wärmeleitelemente (etwa Reflektorbleche) dienenden metallisierten Flächenabschnitte dadurch weiter optimieren, dass die zusätzlich zu den Halbleiter-Leuchtmitteln vorgesehenen und deren Peripherieelektronik ausbildenden elektronischen Bauelemente mit ihrer Anordnung auf der Leiterplatte im Mittelbereich, ideal um die Sensoreinheit bzw. den zugehörigen Flächenbereich bzw. Durchbruch herum, angeordnet sind, so dass ein möglichst großer (metallisierter) Leiterplattenbereich zum Realisieren der thermischen Kühlfläche im Randbereich verbleibt. So ist es etwa weiterbildungsgemäß bevorzugt, eine wirksame Streifenbreite eines von derartigen Bauelementen freien, damit ununterbrochenen und durchgehenden Leiterbahnenbereichs, zumindest entlang eines Randes der Leiterplatte, bevorzugt entlang mehrerer Ränder oder gar umlaufend, so auszubilden, dass die Breite mindestens 10% der zugehörigen Leiterplattenerstreckung, weiter bevorzugt mindestens 15%, noch weiter bevorzugt mindestens 20% dieser Erstreckung beträgt. Entsprechend entsteht die Möglichkeit für eine große wirksame metallisierte Fläche zur Wärmeabfuhr.

Wie vorstehend dargelegt und nachfolgend in der Figurenbeschreibung zur Erfindung beschrieben, bieten die metallisierten Flächenabschnitte gemäß der Erfindung die Möglichkeit zum Kontaktieren mit Wärmeleitelementen, um für eine weitere Wärmeabfuhr zu sorgen. Weiterbildungsgemäß im Rahmen der Erfindung ist daher vorgesehen, flächige Reflektorelemente wärmeleitend zu kontaktieren, mit einem Vorteil in mehrerer Hinsicht: Einerseits kann, etwa durch geeignete metallische Ausgestaltung dieser flächigen Reflektorelemente, eine wirksame Wärmeabfuhr bewirkt werden, zusätzlich wirken diese Reflektorelemente als Blende bzw. Reflektor für die auf der Leiterplatte sitzenden Leuchtmittel, so dass bei geeigneter Ausgestaltung der Reflektorelemente eine lichttechnische bzw. beleuchtungsmäßige Optimierung erfolgen kann (und als weiterer Vorteil können diese Reflektorelemente zudem so realisiert sein, dass sie eine wirksame hochfrequenzmäßige Sperre bzw. Entkopplung für das Sensorsignal erreichen, wichtig insbesondere für den Fall, dass eine Mehrzahl von Leiterplatten der vorliegend erfindungsgemäßen Art einander benachbart vorgesehen sind und jeweilige Hochfrequenx-Sensoreinheiten ansonsten eine gegenseitige Störung bewirken würden; mit anderen Worten, die Reflektorelemente ermöglichen zusätzlich eine Ausrichtung bzw. Fokussierung eines Hochfrequenz-Erfassungsbereichs der jeweiligen Sensoreinheit).

Insbesondere in dem Fall, dass -- bei bevorzugt viereckiger bzw. quadratischer Leiterplatte -- ein derartiges flächiges Reflektorelement an jeder Randseite vorgesehen ist, entsteht so ein gehäuseartiges Modul, welches zudem weiterbildungsgemäß dadurch verschlossen werden kann, dass, zur Leiterplatte parallel ausgerichtet, der Innenraum mit einer geeignet für die Lichtemission der Halbleiter-Leuchtmittel sowie das Hochfrequenz-Sensorsignal durchlässigen Scheibe verschlossen wird. Wie vorstehend beschrieben, bieten die erfindungsgemäßen Maßnahmen die Möglichkeit, die Temperatur im Inneren einer solchen Einheit geeignet abzusenken, insbesondere wenn mindestens einem der Reflektorelemente zusätzlich weitere Mittel zur Wärmeableitung, etwa In ein umgebendes Gehäuse, einen umgebenden Ständer oder dergleichen, zugeordnet sind.

Besonders bevorzugt im Rahmen der Erfindung ist die Leiterplatte Teil eines Leuchtkörpers mit mindestens zwei aneinander angrenzenden, ausleuchtbaren Flächensegmenten gelöst, denen jeweils mindestens ein Leuchtmittel zugeordnet und hinter dem jeweiligen Flächensegment angeordnet ist, wobei die mindestens zwei Leuchtmittel unabhängig voneinander manuell und berührungslos im Nahfeld vor dem jeweiligen Flächensegment aktivierbar sind, so dass die mindestens zwei Flächensegmente unabhängig voneinander ausleuchtbar sind. Diese Weiterbildung bzw. Verwendung der Erfindung kombiniert ein ansprechendes Bedienkonzept auf geschickte Weise mit einem beeindruckenden Ausleuchtkonzept dadurch, dass ein erstes und mindestens ein zweites Flächensegment, insbesondere Oberflächensegmente, vorgesehen werden, die unmittelbar aneinander angrenzen, wobei die Flächensegmente unabhängig voneinander ausleuchtbar, d.h. die den Flächensegmenten zugeordneten Leuchtmittel unabhängig voneinander aktivierbar sind, so dass die Flächensegmente gemeinsam oder einzeln ausgeleuchtet werden können, vorzugsweise derart, dass die bei einer gemeinsamen Beleuchtung beider Flächensegmente keine Grenzfläche zwischen den Flächensegmenten sichtbar ist und bei voneinander separater Ausleuchtung eine scharfe Grenze zwischen dem ausgeleuchteten Flächensegment und dem unausgeleuchteten Flächensegment erkennbar ist. Wesentlich zur Erzielung des gewünschten Effektes ist das beanspruchte Bedienkonzept, nach dem die dem jeweiligen Flächensegment zugeordneten Leuchtmittel manuell und berührungslos, vorzugsweise durch eine Wischbewegung vor dem jeweiligen Flächensegment, aktivierbar sind. Anders ausgedrückt können die dem ersten Flächensegment zugeordneten und hinter diesem angeordneten Leuchtmittel berührungslos durch Anwesenheit oder Bewegung im Nahfeld, d.h. innerhalb eines Abstandes vom Flächensegment von typischerweise weniger als 10 cm, vorzugsweise von weniger als 5 cm, aktiviert werden und die dem zweiten Flächensegment zugeordneten Leuchtmittel durch eine Anwesenheit oder Bewegung im Nahfeld vor dem zweiten Flächensegment. Durch die Kombination dieses Bedienkonzeptes mit aneinander angrenzenden, vorzugsweise vollständig, ausleuchtbaren Flächensegmenten entsteht ein völlig neuer, überraschend visueller Effekt beim Betrachter bzw. Bediener. Bevorzugt sind die Leuchtmittel nicht nur unabhängig voneinander manuell und berührungslos im Nahfeld vor dem jeweiligen Flächensegment aktivierbar, sondern auch auf diese Weise, d.h. durch Anwesenheits- oder Bewegungsdetektion, wieder deaktivierbar.

Grundsätzlich ist es möglich, die unmittelbar aneinander angrenzenden Flächensegmente aus zwei miteinander verbundenen Bauteilen auszubilden. Besonders bevorzugt ist es jedoch, wenn die Flächensegmente nahtlos ineinander übergehen, d.h. einstückig, vorzugsweise aus einem Guss ausgebildet sind.

Ganz besonders bevorzugt ist jedem ausleuchtbaren Flächensegment jeweils ein Nahfeldsensor als Hochfrequenzsensor, vorzugsweise Radarsensor, zugeordnet der mit dem den jeweiligen Flächensegment zugeordneten Leuchtmitteln wirkverbunden ist, derart, dass wenn von dem Nahfeldsensor eine Bewegung oder eine Anwesenheit vor dem jeweiligen Flächensegment detektiert wird die Leuchtmittel dauerhaft, oder bis zur Deaktivierung oder für eine definierte Zeitspanne aktiviert werden.

Besonders zweckmäßig ist eine Ausführungsform des Leuchtkörpers, bei der die Nahfeldsensoren, insbesondere gemeinsam mit den jeweiligen Leuchtmitteln hinter den Flächensegmenten angeordnet sind. Anders ausgedrückt, befindet sich bevorzugt hinter jedem ausleuchtbaren Flächensegment ein Nahfeldsensor und mindestens ein Leuchtmittel, vorzugsweise eine Gruppe von LEDs.

Die Flächensegmente bzw. die Leuchtkörperoberfläche ist bevorzugt derart ausgebildet, dass die hinter den Flächensegmenten angeordneten Leuchtmittel die Flächensegmente durchleuchten können. Besonders bevorzugt sind die Flächensegmente hierzu aus Kunststoff oder Glas ausgebildet, wobei besonders gute optische Effekte dadurch erreicht werden können, dass der Kunststoff oder das Glas opak eingefärbt sind. Bevorzugt sind die Flächensegmente aus nicht durchsichtigem, jedoch lichtdurchlässigem Material, insbesondere Kunststoff oder Glas ausgebildet. Ganz besonders bevorzugt sind die ausleuchtbaren Flächensegmente aus Kryolithglas (Opalglas) gefertigt. Hierbei handelt es sich um getrübtes, milch-weiß erscheinendes Glas. Auch ist es möglich, transparentes Material mit einem nicht durchsichtigen, jedoch lichtdurchlässigen Material zu beschichten. Besonders beeindruckende optische Effekte können dadurch erzielt werden, dass die mindestens zwei Flächensegmente winklig zueinander angeordnet werden, um hierdurch, obwohl die Flächensegmente unmittelbar aneinander angrenzen eine scharfe optische Trennung bei separater Ausleuchtung zu erzielen. Besonders beeindruckend sind die erzielbaren optischen Effekte bei einer rechtwinkligen Anordnung der mindestens zwei ausleuchtbaren Flächensegmente. Dabei ist es noch weiter bevorzugt, wenn der Leuchtkörper insgesamt als Quader ausgeformt ist, vorzugsweise als Kubus, also mit insgesamt gleich langen Seitenkanten. Mit Vorteil beträgt die Seitenkantenlänge 10 bis 15 cm, noch weiter bevorzugt 11 cm. Noch weiter bevorzugt ist es dabei, wenn sämtliche resultierenden sechs Flächensegmente unabhängig voneinander ausleuchtbar sind, d.h. dass hinter jedem der sechs Flächensegmente ein Nahfeldsensor und mindestens ein Leuchtmittel angeordnet ist. Auch ist es denkbar, dass lediglich fünf Flächensegmente unabhängig voneinander ausleuchtbar sind, insbesondere dann, wenn eines der sechs Flächensegmente zu einer Decke, zu einer Tragfläche oder zu einer Wand ausgerichtet ist.

Die erzielbaren optischen Effekte können dadurch weiter verbessert werden, dass die Flächensegmente als ebene, vorzugsweise, zumindest näherungsweise, zweidimensionale, d.h. plattenförmige, Flächensegmente ausgestaltet sind.

Im Hinblick auf die konkrete Anordnung der Leuchtmittel gibt es unterschiedliche Möglichkeiten. Ganz besonders bevorzugt ist es eine Ausführungsform, bei der die Leuchtmittel in einem gemeinsamen, außen von den Flächensegmenten begrenzten Raum angeordnet sind und die Leuchtmittel derart ausgerichtet und angeordnet sind, dass sie jeweils nur das ihnen zugeordnete Flächensegment ausleuchten. Bei einer derartigen Ausführungsform ist es weiter bevorzugt, wenn die Flächensegmente winklig, insbesondere rechtwinklig zueinander angeordnet sind, um eine optische Trennung bei den unmittelbar aneinander angrenzenden Flächensegmenten zu erzielen.

Bei einer alternativen Ausführungsvariante des Leuchtkörpers sind die den unterschiedlichen Flächensegmenten zugeordneten Leuchtmittel nicht in einem gemeinsamen Raum angeordnet, sondern jedem Flächensegment ist Im innern des Leuchtkörpers eine Kammer zugeordnet, in der die dem Flächensegment zugeordneten Leuchtmittel, bevorzugt zusammen mit einem Nahfeldsensor angeordnet sind, wobei die Kammerwände eine Ausleuchtung benachbarter Flächensegmente mittels der einem Flächensegment zugeordneten Leuchtmittel sicher verhindern. Bevorzugt sind die Kammerwände von außerhalb des Leuchtkörpers nicht zu erkennen.

Wie zuvor erläutert, ist bei einer bevorzugten Ausführungsvariante des Leuchtkörpers vorgesehen, dass die Flächensegmente eine ebene, d.h. im Wesentlichen zweidimensionale Oberfläche aufweisen. Gemäß einer alternativen, ebenfalls bevorzugten Ausführungsform ist vorgesehen, dass die Flächensegmente dreidimensional ausgeformt sind. Hierdurch kann ein nahezu beliebig ausgeformter Leuchtkörper in unterschiedliche, aneinander angrenzende Flächensegmente unterteilt werden, die unabhängig voneinander ausleuchtbar sind.

Besonders vorteilhaft ist eine Ausführungsvariante des Leuchtkörpers, bei der die Außenoberfläche des Leuchtkörpers ausschließlich aus ausleuchtbaren Flächensegmenten ausgebildet ist, wobei zumindest jeweils zwei benachbarte Flächensegmente unmittelbar aneinander angrenzen. Bei einer alternativen Ausführungsform sind mindestens zwei unabhängig voneinander ausleuchtbare Flächensegmente mit mindestens einem nicht ausleuchtbaren Flächensegment kombiniert.

Der Leuchtkörper kann auf vielfältige Weise im Raum angeordnet werden. So ist es denkbar, den Leuchtkörper an einer Wand festzulegen, wobei es dabei besonders bevorzugt ist, wenn die Befestigungsmittel zum Festlegen des Leuchtkörpers an der Wand an einer Seitenkante oder an einem Eck des Leuchtkörpers angeordnet sind und nicht mittig an einem Flächensegment, wobei auch eine derartige Ausführungsform realisierbar ist. Zusätzlich oder alternativ können Befestigungsmittel zum Festlegen des Leuchtkörpers an einer Decke, insbesondere einer Raumdecke oder auf Ständer, insbesondere einem säulenförmigen Ständer vorgesehen werden. Wenn dem Leuchtkörper ein Ständer, insbesondere ein säulenförmiger Ständer, zugeordnet ist, kann bei Bedarf auch auf Befestigungsmittel verzichtet und der Leuchtkörper auf den Ständer flächig abgestellt werden.

Ganz besonders bevorzugt ist eine Ausführungsvariante des Leuchtkörpers, bei der mehrere der Kammern, vorzugsweise jede Kammer, vorzugsweise auf der von dem Flächensegment abgewandten Seite von jeweils einer Leiterplatte begrenzt sind/ist, die die jeweiligen Leuchtmittel und den zugehörigen Nahfeldsensor trägt. Dabei ist es besonders bevorzugt, wenn die Leiterplatte, zumindest näherungsweise, parallel zu dem zugehörigen Flächensegment angeordnet ist, so dass das Flächensegment die Kammer auf der Vorderseite begrenzt. Besonders zweckmäßig ist es, wenn pro Leiterplatte mehrere, insbesondere vier, LEDs vorgesehen sind, wobei es noch weiter bevorzugt ist, wenn die LEDs auf den Enden eines gedachten Rechtecks angeordnet sind. Im Hinblick auf die konkrete Ausbildung der zum jeweiligen Nahfeldsensor gehörenden Antenne gibt es unterschiedliche Möglichkeiten. Besonders bevorzugt ist es, wenn es sich bei der Antenne um eine in die Leiterplatte geätzte Antenne handelt.

Ganz besonders bevorzugt ist es, wenn ein aus acht Leiterplatten gebildeter Kubus vorgesehen ist, der zentrisch im Leuchtkörper angeordnet ist. Besonders bevorzugt werden die Leiterplatten hierzu von einer, beispielsweise als Kunststoffspritzgussteil ausgebildeten Tragkonstruktion getragen, die sich noch weiter bevorzugt innerhalb des von den Leiterplatten gebildeten Kubus befindet.

Wie zuvor erläutert, ist es bevorzugt, wenn die Kammern jeweils von einem Flächensegment und einer Leiterplatte auf Vorder- bzw. Rückseite begrenzt sind. Bevorzugt sind die Kammern in einem Bereich zwischen Flächensegment und Leiterplatte von Reflektorelementen begrenzt, wobei die Reflektorelemente derart angeordnet sind, dass diese jeweils zwei benachbarte Kammern (optisch) voneinander separieren, vorzugsweise derart, dass die Leuchtmittel einer ersten Kammer nicht das Flächensegment einer zweiten, benachbarten Kammer beleuchten können. Besonders bevorzugt ist es, wenn die Reflektorelemente eine Doppelfunktion haben, also nicht nur für eine optische Separierung der Kammern Sorge tragen, sondern zudem als Wärmebrücke bzw. Wärmeleitmittel dienen, um die im Betrieb der Leuchtmittel entstehende Wärme abzuführen. Zu diesem Zweck ist es bevorzugt, wenn die Reflektorelemente mit den Leiterplatten wärmeleitend verbunden sind - bevorzugt ist jedes Reflektorelement wärmeleitend mit mindestens einer zugeordneten Leiterplatte verbunden, insbesondere dadurch, dass das Reflektorelement mit einem, insbesondere metallischen, Leiterplattenrahmen verbunden ist. Im Hinblick auf die konkrete Ausbildung bzw. Materialwahl zur Herstellung der Reflektorelemente gibt es unterschiedliche Möglichkeiten. Besonders bevorzugt ist es im Hinblick auf eine gute Wärmeleitfähigkeit, die Reflektorelemente als Metallbleche auszubilden. Alternativ ist es denkbar, die Reflektorelemente als Kunststoffspritzgussteile auszubilden, wobei es in diesem Fall bevorzugt ist, einen wärmeleitenden Kunststoff einzusetzen oder den Kunststoff mit wärmeleitenden Partikeln, insbesondere Metallpartikeln, zu versetzen.

Im Hinblick auf die Befestigung der Reflektorelemente an den Leiterplatten bzw. den Leiterplattenrahmen gibt es unterschiedliche Möglichkeiten. Denkbar ist es, das Reflektorelement mit Haltelaschen des Leiterplattenrahmens zu verlöten. Steck- bzw. Clipkonstruktionen sind ebenfalls alternativ realisierbar.

Besonders bevorzugt ist eine Ausführungsvariante, bei der mindestens ein, vorzugsweise ausschließlich ein, Reflektorelement mit einem, insbesondere von mindestens einem Stab, vorzugsweise von zwei Stäben gebildeten, Leuchtkörperfuß (Ständer) verbunden ist, der noch weiter bevorzugt aus Metall ausgebildet ist, um die Wärme über das Reflektorelement und ggf. ein Adapterstück an den Fuß (Ständer) und über diesen an die Umgebung ableiten zu können. Der Fuß (Ständer) dient bevorzugt als Wärmesenke.

Besonders zweckmäßig ist eine Ausführungsvariante des Leuchtkörpers, bei der die Leuchtmittel und die Nahfeldsensoren, welche bevorzugt sämtliche auf Leiterplatten angeordnet sind, im ausgeschalteten Zustand der Leuchtmittel nicht sichtbar sind. Bevorzugt sind die Flächensegmente hierzu milchglasartig getrübt.

In Weiterbildung der Erfindung ist mit Vorteil vorgesehen, dass mindestens zwei unterschiedlichen Flächensegmenten zugeordnete Nahfeldsensoren, insbesondere sämtlichen Nahfeldsensoren, ein gemeinsamer Steuermoduscontroller zugeordnet ist, der derart ausgebildet ist, dass dieser auf eine gleichzeitige oder zeitlich versetzte Aktivierung von mindestens zwei unterschiedlichen Nahfeldsensoren reagiert bzw. einen Betriebsmodus startet oder beendet. Auf diese Weise können unterschiedliche Betriebsmodi auf elegante Weise aktiviert oder deaktiviert werden. So kann beispielsweise ein erster Betriebsmodus dadurch ausgelöst werden, dass zwei um 90° zueinander versetzte Nahfeldsensoren gleichzeitig aktiviert werden oder ein zweiter, von dem ersten Betriebsmodus unterschiedlicher Betriebsmodus dadurch gestartet wird, dass zwei parallel angeordnete Nahfeldsensoren gleichzeitig aktiviert werden. Bevorzugt werden unterschiedliche Betriebsmodi in Abhängigkeit der gleichzeitig aktivierten Nahfeldsensorkombination ausgeführt. So ist beispielsweise denkbar, dass sämtliche Leuchtmittel des Leuchtkörpers eingeschaltet werden, wenn zwei bestimmte Nahfeldsensoren gleichzeitig aktiviert werden und wieder ausgeschaltet werden, wenn diese zwei oder ein anderes Paar von Nahfeldsensoren gleichzeitig aktiviert wird. Auch ist es denkbar, dass durch eine gleichzeitige Aktivierung zweier Nahfeldsensoren nur eine bestimmte Anzahl an Leuchtmitteln, bevorzugt unterschiedlichen Flächensegmenten zugeordnete Leuchtmittel, aktiviert werden, beispielsweise nur die nach oben und unten ausgerichteten Leuchtmittel.

Im Ergebnis entsteht mithilfe der erfindungsgemäß beanspruchten Leiterplatte die Möglichkeit, eine kompakte, Leistungs-LEDs aufweisende Leuchteneinheit zu realisieren, welche trotz ihrer Kompaktheit (und der notwendigen Abwärme) thermisch so eingerichtet werden kann, dass gleichwohl ein zuverlässiger Hochfrequenz-Sensorbetrieb, aus der Mitte der Leuchtmittelanordnung heraus und damit besonders kompakt, erfolgen kann. So ist weiterbildungsgemäß die Verwendung als Nahfeldsensor besonders bevorzugt, wobei als Nahfeld im Sinne der Erfindung insbesondere ein Bereich kleiner 30, bevorzugt kleiner 15 cm vor einer die Reflektorelemente begrenzenden und für Lichtemission durchlässigen Scheibe gelten soll.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Standleuchte, umfassend einen quaderförmigen Leuchtkörper mit sechs gleichgroßen, rechtwinklig zueinander angeordneten, unabhängig voneinander ausleuchtbaren Flächensegmenten,
- Fig. 2:: in einer schematischen Darstellung einen Aktivierungsvorgang zur Aktivierung von Leuchtmitteln hinter einem frontseitigen Flächensegment,
- Fig. 3:: den Leuchtkörper mit ausgeleuchtetem Front-Flächensegment,
- Fig. 4:: den Leuchtkörper mit ausgeleuchtetem oberem Flächensegment,
- Fig. 5:: den Leuchtkörper mit ausgeleuchteten oberen und unteren Flächensegmenten,
- Fig. 6:: Leuchtkörper, bei dem sämtliche sechs Flächensegmente ausgeleuchtet sind,
- Fig. 7a:: eine Rückansicht des Leuchtkörpers,
- Fig. 7b:: eine Schnittansicht entlang der Schnittlinie A - A gemäß Fig. 7a,
- Fig. 8:: einen Leuchtkörper mit acht kubusförmig angeordneten Flächensegmenten,
- Fig. 9:: das Innere des Leuchtkörpers gemäß Fig. 8, wobei ein aus fünf Flächensegmenten gebildeter Deckel von einem unteren Trägerflächensegment abgehoben wurde,
- Fig. 10:: weitere Details des Leuchtkörpers gemäß den Fig. 8 und 9, wobei ein aus acht Leiterplatten gebildeter innerer Kubus gezeigt ist, der über Reflektorblech mit unteren Trägerflächensegmenten sowie über ein Adapterteil mit einem Fuß (Ständer) des Leuchtkörpers verbunden ist,
- Fig. 11:: den inneren, von Leiterplatten gebildeten Kubus in Alleinstellung,
- Fig. 12:: den Kubus gemäß Fig. 11 teilweise ohne Leiterplatten, wobei der von Kunststoffspritzgussteilen gebildete Rahmen bzw. Träger für Leiterplatten zu erkennen ist,
- Fig. 13:: eine schematische Draufsicht auf eine erfindungsgemäße Leiterplatte in bestücktem Zustand mit Leistungshalbleiter-Leuchtmitteln sowie Peripherieelektronik;
- Fig. 14:: eine Ansicht der Bestückungsseite der Leiterplatte gemäß Fig. 13 mit Leiterplattenlayout und
- Fig. 15:: eine Ansicht der zugehörigen Rückseite, welche die metallisierten Flächenabschnitte als Kühlflächen erkennen lässt.

In den Figuren sind gleiche Elemente und Elemente mit der gleichen Funktion mit den gleichen Bezugszeichen gekennzeichnet.

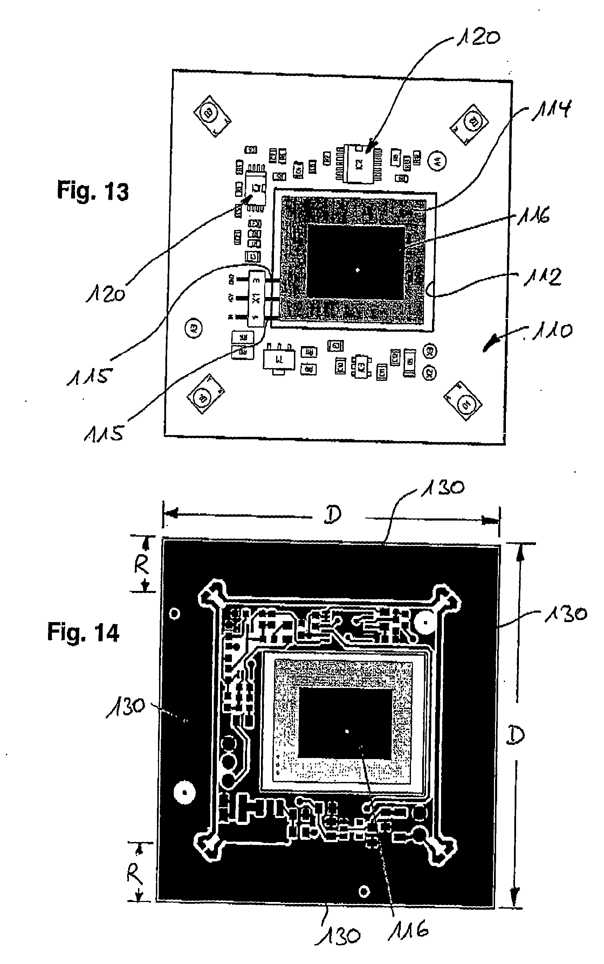

Die Fig. 13 bzw. Fig. 14 zeigt die Bestückungsseite einer Leiterplatte eines typischen Maßes 11 x 11 cm. Diese Leiterplatte 110 weist in ihren Eckbereichen vier Leistungs-LEDs D1 bis D4 auf, welche eine typische Leistung von ca. 1 bis 3 Watt besitzen. Im Zentrum der quadratischen Leiterplatte ist ein rechteckförmiger Ausschnitt 112 im Leiterplattenmaterial gebildet, in welchem -- thermisch über einen Luftspalt entkoppelt -- eine modulartig auf einer Hochfrequenz-Leiterplatte 114 gebildete Hochfrequenz-Sensoreinheit 116 eingesetzt und über Drahtbrücken 115 geeignet kontaktiert werden kann.

Die Hochfrequenz-Sensoreinheit 116 ist in ansonsten bekannter Weise als Doppler-Einheit realisiert und bildet einen Bewegungs- Erfassungsbereich in einem Nahfeld aus, welches sich zwischen ca. 10 und ca. 50 cm von der (nicht näher im Detail gezeigten) Sensoroberfläche bzw. dort auf der Hochfrequenz-Leiterplatte 114 integrierten Antennen bzw. Strahlern erstreckt.

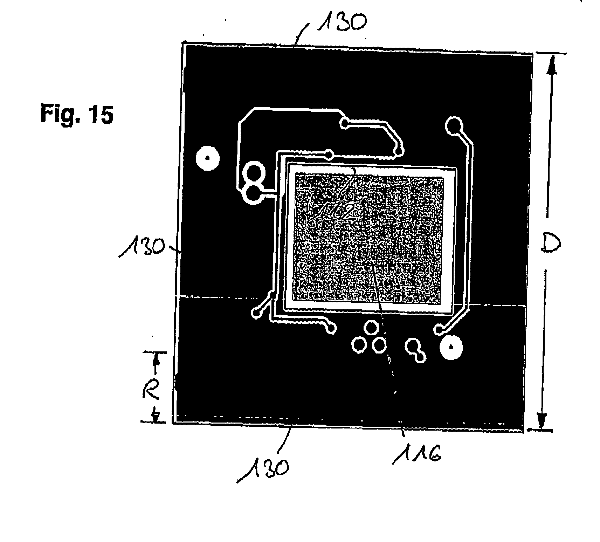

Die Leiterplatte 110 weist, wie insbesondere aus der Draufsicht der Fig. 13 erkennbar ist, eine Mehrzahl von Elektronikbauelementen 120 auf, etwa beinhaltend einen Mikrocontroller, Spannungs- und Stromregler für die LEDs sowie geeignete Verstärker, wobei derartige Peripherieschaltungen als solche bekannt sind. Diese sind, in der Fig. 13 gezeigten Art, konzentriert um den Ausschnitt 112 in der Leiterplatte 110 herum angeordnet, damit mittig bzw. zentrisch orientiert und ermöglichen so, dass ein Randbereich R der Leiterplatte mit einer entsprechenden Randbreite ohne Bestückung durch die Bauelemente 120 bleibt. Wie zusätzlich der Vergleich mit der Rückseite der Fig. 15 verdeutlicht, beträgt diese Breite des Randes mit ca. 1,7 cm etwa 15% der Erstreckung D der Leiterplatte (11 cm), so dass auf diese Weise randseitig ein beträchtlicher Flächenbereich 130 unbestückt durch Bauelemente und damit zur Kühlung bzw. Wärmeabfuhr (Fig. 15) verbleibt.

Diese Vorteile werden insbesondere aus der Darstellung der Fig. 15 besonders deutlich, denn die beschriebene Konzentration der elektronischen Bauelemente -- mit Ausnahme der Halbleiter-Leuchtmittel -- im Innenbereich ermöglicht eine besonders großflächige, freie und unbestückte, damit durchgängige und für die Wärmeabfuhr günstige Gestaltung von freien metallisierten Flächen 130. Hier kann dann in besonders günstiger Weise und großflächig ein Kontaktieren mit wärmeabführenden Elementen erfolgen, etwa mit Reflektorelementen (Reflektorblechen), wie nachstehend beschrieben wird.

Für den Anwendungskontext der Erfindung wird im Weiteren eine würfelförmige Konfiguration von insgesamt sechs einzelnen Leiterplatten der vorliegend zur Erfindung gehörigen Art beschrieben (mit dem Bezugszeichen 14a bis 14f versehen); diese Leiterplatten sind eingebettet in ein System aus jeweils umgebenden Reflektorblechen (mit den Bezugszeichen 16 versehen), welche in der vorbeschrieben vorteilhaften Art nicht nur für eine günstige Wärmeabfuhr sorgen, sondern zusätzlich die jeweilige Lichtemission der Leistungs-LEDs begrenzen und kanalisieren und zusätzlich die Hochfrequenzstrahlen der jeweils mittig vorgesehenen Einzel-Sensoreinheiten voneinander trennen.

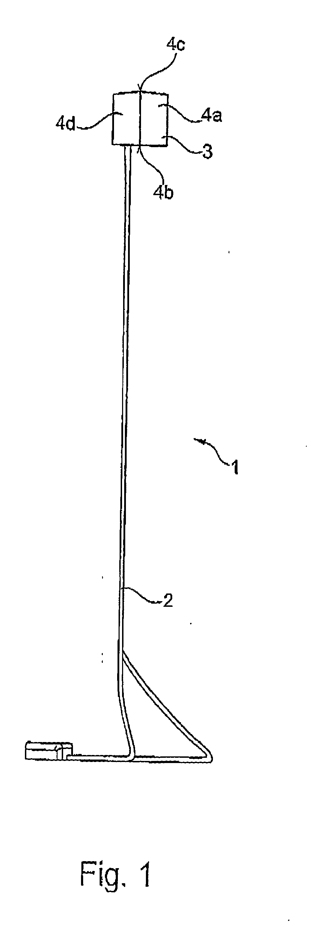

So ist in Fig. 1 ist eine Standleuchte 1, umfassend einen langgestreckten metallischen Ständer 2 sowie einen endseitig an diesem gehaltenen Leuchtkörper 3 gezeigt. Die Standleuchte 1 umfasst ein nicht gezeigtes, dem Leuchtkörper 3 zugeordnetes externes Netzgerät.

Der Leuchtkörper 3 ist kubusförmig konturiert und relativ zu dem Ständer 2 in einem definierten Winkelbereich von 15° verschwenkbar angeordnet.

Die Außenoberfläche des Leuchtkörpers 3 ist gebildet von insgesamt sechs Flächensegmenten 4a bis 4f, wobei das mit dem Bezugszeichen 4a versehene Flächensegment eine Frontseite, das mit dem Bezugszeichen 4b gekennzeichnete Flächensegment eine Unterseite und das mit 4c gekennzeichnete Flächensegment eine Oberseite bilden. Weiterhin sind zwei seitliche Flächensegmente 4d und 4e (nicht gezeigt) sowie ein rückwärtiges Flächensegment 4f (nicht gezeigt) vorgesehen, wobei der Leuchtkörper 3 im Bereich des rückwärtigen Flächensegmentes 4f am Ständer 2 angelenkt ist. Wesentlich ist, dass sämtliche jeweils benachbarten Flächensegmente unmittelbar aneinander angrenzen.

Sämtliche Flächensegmente 4a bis 4f sind unabhängig ausleuchtbar. Hierzu sind hinter jedem Flächensegment 4a bis 4f nicht gezeigte Leuchtmittel in Form jeweils einer LED-Anordnung platziert. Ebenfalls befindet sich hinter jedem Flächensegment 4a bis 4f ein Nahfeldsensor, hier ein Radarsensor, der eine manuelle, berührungslose Aktivierung der Leuchtmittel ermöglicht, derart, dass die hinter einem Flächensegment angeordneten Leuchtmittel durch eine Handbewegung, vorzugsweise eine Wischbewegung vor dem jeweiligen Flächensegment unabhängig von den Leuchtmitteln benachbarter Flächensegmente aktivierbar und auch wieder deaktivierbar sind.

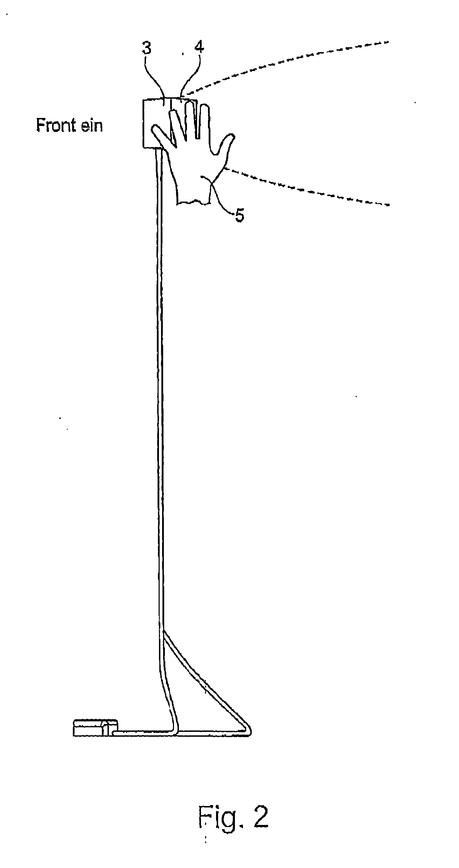

Fig. 2 zeigt schematisch die berührungslose Aktivierung der dem frontseitigen Flächensegment 4a zugeordneten Leuchtmittel durch eine Wischbewegung mittels der Hand 5 einer ansonsten nicht weiter dargestellten Bedienperson im Nahfeld vor dem frontseitigen Flächensegment 4a. Dabei ist der hinter dem Flächensegment 4a angeordnete, also innerhalb des Leuchtkörpers 3 platzierte Nahfeldsensor derart ausgebildet und ausgerichtet, dass diese eine Bewegung in einem Abstandsbereich von etwa 5 cm in Bezug auf das Flächensegment 4a detektiert und bei Detektion einer Bewegung die zugehörigen Leuchtmittel aktiviert bzw. wieder deaktiviert.

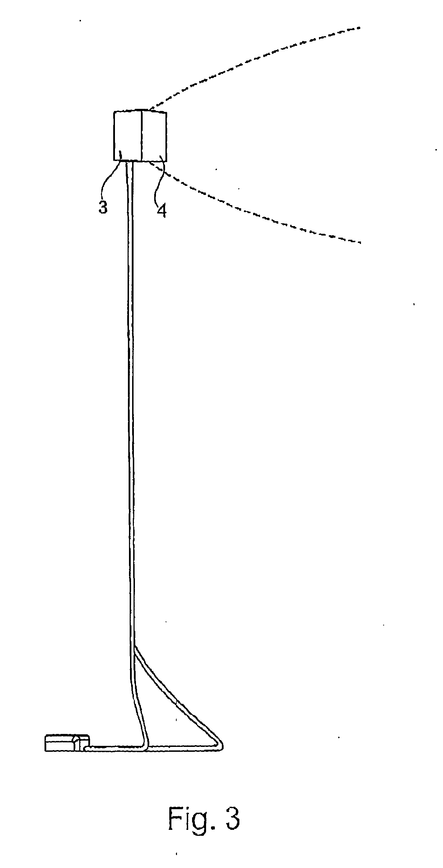

Fig. 3 zeigt den Leuchtkörper 3 mit ausgeleuchtetem, frontseitigem Flächensegment 4a. Wesentlich für die erzielbaren optischen Effekte ist, dass das ebene, quadratförmige frontseitige Flächensegment 4a vollständig ausgeleuchtet ist, jedoch die unmittelbar angrenzenden, rechtwinklig zu dem Flächensegment 4a angeordneten, ebenen Flächensegmente 4b bis 4e nicht mit ausgeleuchtet werden. Das Flächensegment 4a ist derart ausgeleuchtet, dass es als homogene Fläche erscheint. Als Material zur Ausbildung der Flächensegmente 4a bis 4f wurde in dem gezeigten Ausführungsbeispiel Opalglas verwendet. Alternativ kann beispielsweise transparentes Glas mit einer Opalglasschicht vorgesehen werden.

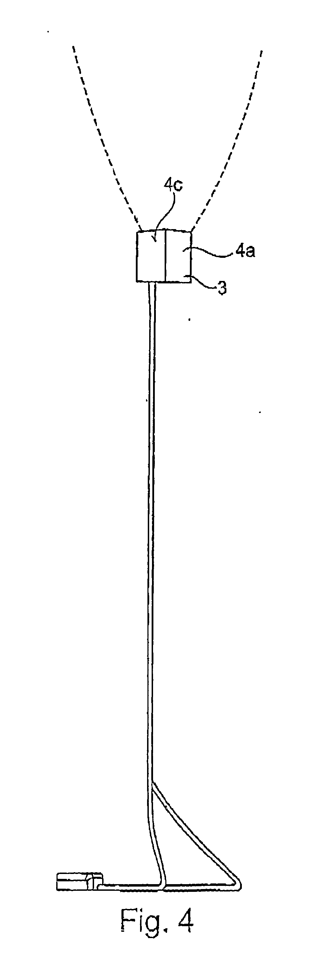

Fig. 4 zeigt den Leuchtkörper 3 mit ausgeleuchtetem oberem Flächensegment 4c. Sämtliche anderen Flächensegmente 4a, 4b, 4d bis 4f sind nicht ausgeleuchtet.

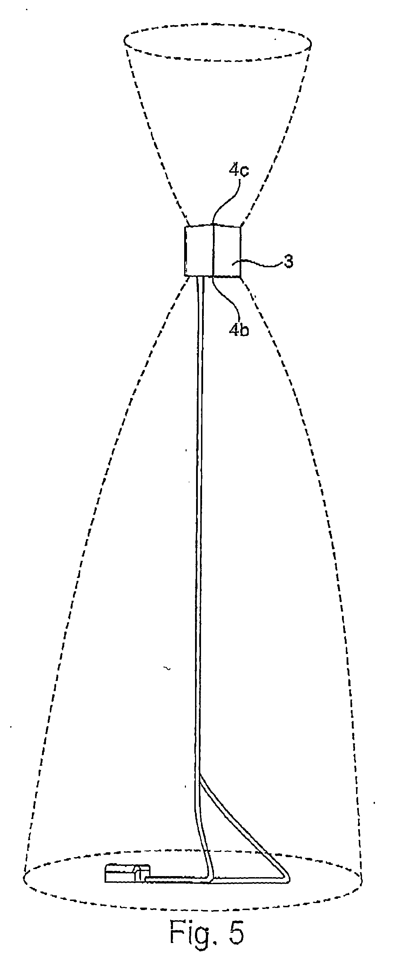

Fig. 5 zeigt einen Beleuchtungszustand, bei dem die voneinander abgewandten oberen und unteren Flächensegmente 4b, 4c durch Aktivierung der jeweils zugeordneten Leuchtmittel ausgeleuchtet sind. Sämtliche anderen Flächensegmente 4a und 4d bis 4f sind nicht ausgeleuchtet, d.h. die diesen zugeordneten Leuchtmittel sind deaktiviert.

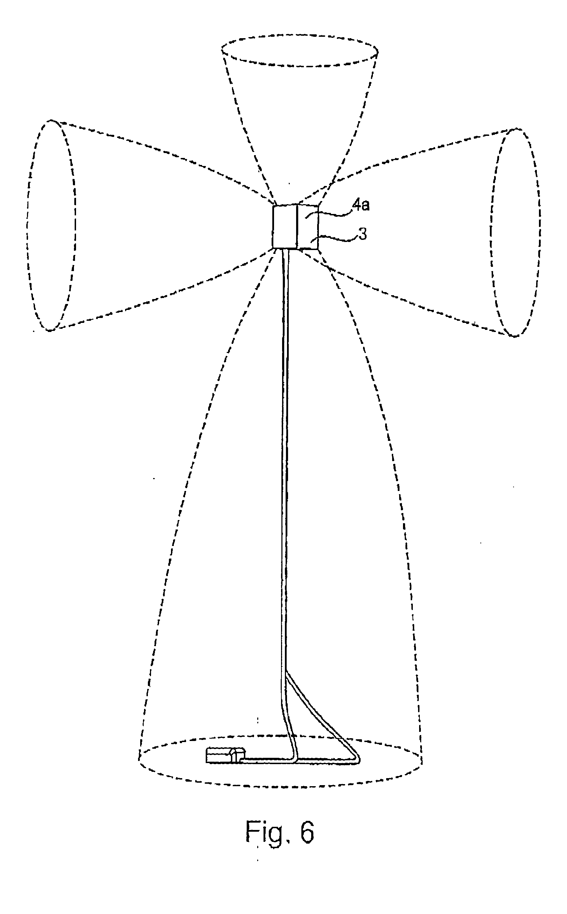

Fig. 6 zeigt einen Beleuchtungszustand des Leuchtkörpers 3, bei dem sämtliche Flächensegmente 4a bis 4f ausgeleuchtet sind, d.h. es sind sämtliche im Leuchtkörper 3 angeordnete Leuchtmittel aktiviert.

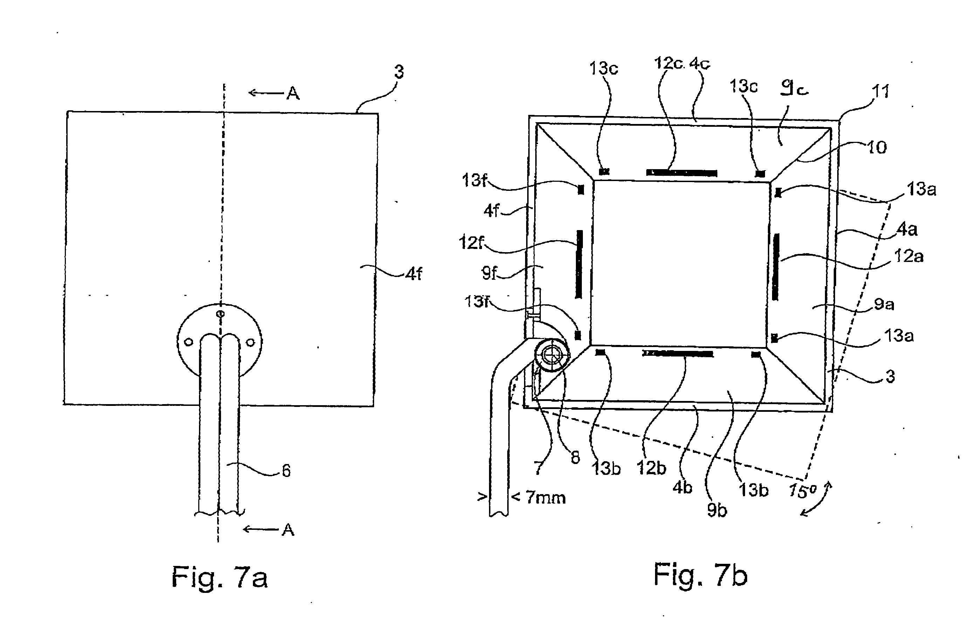

Fig. 7a zeigt eine Ansicht auf das rückwärtige Flächensegment 4f des Leuchtkörpers 3. Das rückwärtige Flächensegment 4f ist durchsetzt von zwei metallischen Stäben 6 des Ständers 2, die im Bereich hinter dem rückwärtigen Flächensegment 4f gelenkig über Befestigungsmittel 7 an den Leuchtkörper 3 angebunden sind (vgl. Fig. 7b). Die Befestigungsmittel 7 erlauben eine Verschwenkung des Leuchtkörpers um eine parallel zum unteren Flächensegment 4b verlaufenden Schwenkachse 8.

Wie sich aus Fig. 7b ergibt, ist im Bereich hinter jedem Flächensegment 4a bis 4f eine Kammer 9a bis 9f angeordnet, wobei jede Kammer 9a bis 9f außen von dem zugehörigen Flächensegment 4a bis 4f begrenzt ist. Seitenwände 10 der Kammer 9a bis 9f verlaufen schräg bis zu den Seitenkanten 11 des Leuchtkörpers, an denen die Flächensegmente 4a bis 4f unmittelbar aneinanderstoßen und verhindern somit eine Ausleuchtung benachbarter Flächensegmente.

Innerhalb jeder Kammer 9a bis 9f ist ein in dem gezeigten Ausführungsbeispiel als Radarsensor ausgebildeter Nahfeldsensor 12a bis 12f angeordnet, der Bewegungen im Nahbereich vor dem jeweiligen Flächensegment 4a bis 4f detektiert. Jeder Sensor 12a bis 12f schaltet bei einer Bewegungsdetektierung die sem zugeordnete Leuchtmittel 13a bis 13f. Anders ausgedrückt sind die jeweils einem Flächensegment 4a bis 4f zugeordneten, jeweils als LED-Anordnung ausgebildeten Leuchtmittel 13a bis 13f mit jeweils einem dem Flächensegment 4a bis 4f zugeordneten Nahfeldsensor 12a bis 12f manuell und berührungsfrei im Nahfeld vor dem jeweiligen Flächensegment 4a bis 4f, insbesondere durch eine Wischbewegung von Hand aktivierbar und deaktivierbar.

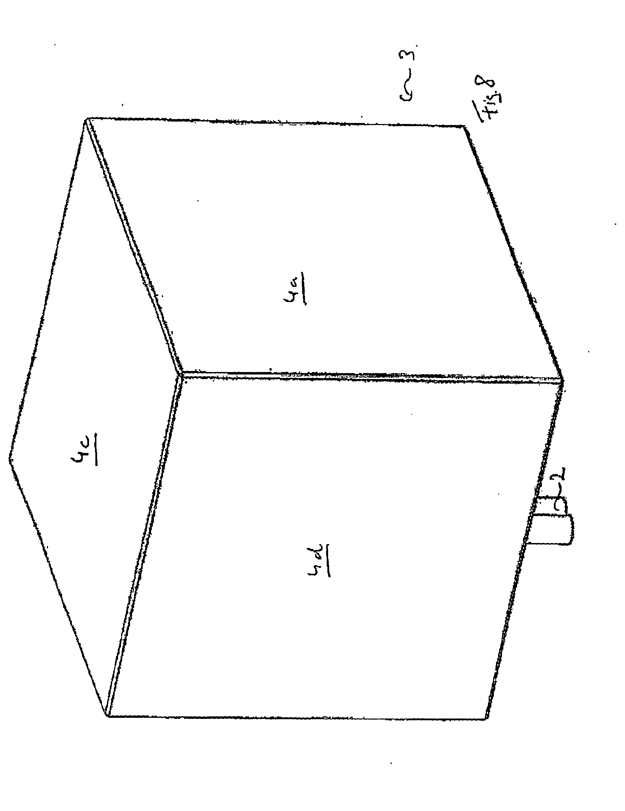

Fig. 8 zeigt einen als Kubus ausgeformten Leuchtkörper in einer Ansicht von außen. In der Ansicht gemäß Fig. 8 sind drei Flächensegmente 4a, 4c, 4d von insgesamt sechs Flächensegmenten 4a bis 4f gezeigt. Jedes Flächensegment hat eine rechteckige, hier quadratische Umfangskontur, wobei die oberen fünf Flächensegmente (vier Seitenflächensegmente und ein Deckelflächensegment) fest miteinander verbunden sind und eine Art Deckel bzw. Aufsatz bilden, der auf einem unteren (Träger-) Flächensegment aufsitzt. Zu erkennen ist ausschnittsweise ein Ständer 2, der in dem gezeigten Ausführungsbeispiel aus Metall ausgebildet ist und welcher, wie anhand der folgenden Figuren noch erläutert werden wird, wärmeableitend mit Leuchtmitteln verbunden ist.

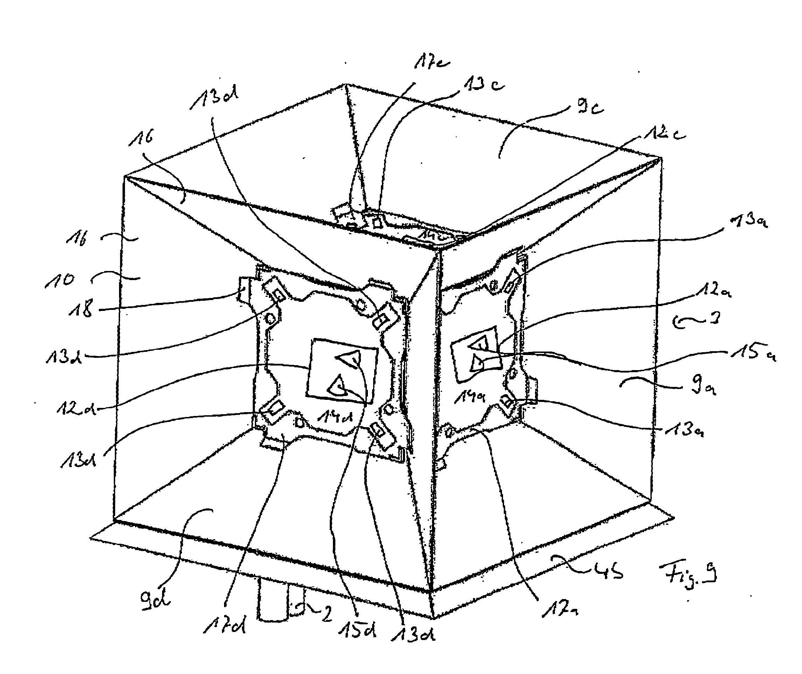

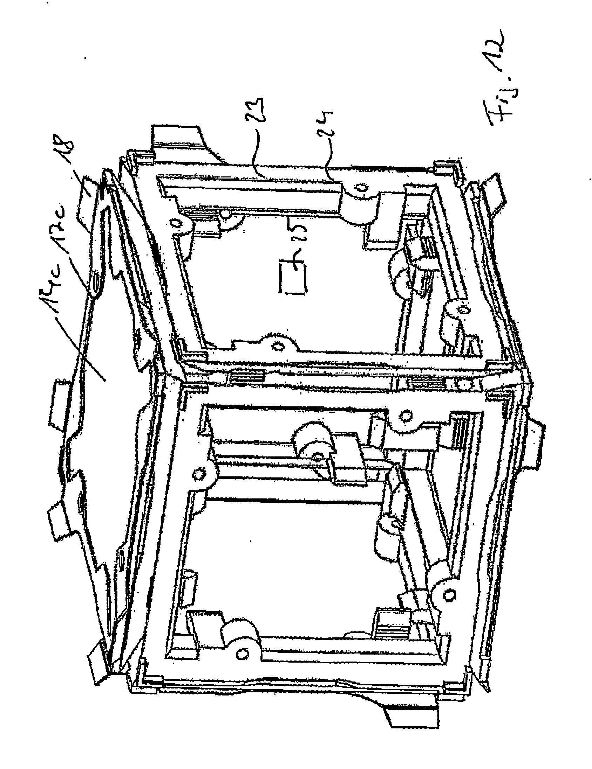

Fig. 9 zeigt das "Innenleben" des Leuchtkörpers 3 gemäß Fig. 8. Zu erkennen ist das untere (Träger-) Flächensegment 4b, welches den von den anderen, nicht gezeigten Flächensegmenten gebildeten Deckel bzw. Aufsatz trägt. Hierzu ist das (Träger-) Flächensegment 4b mit einer seitlichen Schräge versehen, die mit korrespondierenden Schrägen des Aufsatzes formschlüssig zusammenwirkt, so dass bei aufgesetztem Deckel bzw. Aufsatz eine Kubusform resultiert. Zu erkennen sind ferner drei Kammern 9a, 9b, 9d von insgesamt sechs Kammern 9a bis 9f, wobei jede Kammer auf ihrer nach außen gerichteten Vorderseite von einem zugehörigen Flächensegment begrenzt ist. Auf der jeweils vom Flächensegment abgewandten, d.h. inneren Seite wird jede Kammer begrenzt von einer Leiterplatte 14a bis 14f, wobei jede parallel zum zugehörigen Flächensegment 4a bis 4f angeordnete Leiterplatte 14a bis 14f die der jeweiligen Kammer 9a bis 9f zugeordneten Leuchtmittel 13a bis 13f trägt. In dem gezeigten Ausführungsbeispiel sind als Leuchtmittel 13a bis 13f pro Leiterplatte 14a bis 14f insgesamt vier LEDs vorgesehen, die auf den Ecken eines gedachten Quadrates angeordnet sind. Ferner trägt jede mit Abstand zu dem zugehörigen Flächensegment 4a bis 4f angeordnete Leiterplatte 14a bis 14f jeweils einen Nahfeldsensor 12a bis 12f, wobei jeder Nahfeldsensor 12a bis 12f jeweils eine in die Leiterplatte 14a bis 14f eingeätzte Antenne 15a bis 15f umfasst. Weitere Details der Leiterplatten 14a bis 14f ergeben sich aus der vorstehenden Beschreibung der Fig. 12 bis 15 (dort trägt eine jeweilige Leiterplatte das Bezugszeichen 110).

In einem Bereich zwischen den äußeren Flächensegmenten 4a bis 4f und den zugehörigen Leiterplatten 14a bis 14f befinden sich schräg angeordnete Seitenwände 10, wobei jede Seitenwand 10 von einem Reflektorelement 16 gebildet ist. Wie sich aus Fig. 9 ergibt, treffen sich jeweils drei Reflektorelemente 16 unter einem Winkel von 120°. Jeweils zwei unmittelbar benachbarte Kammern 9a bis 9f werden optisch von je einer von einem Reflektorelement 16 gebildeten Seitenwand 10 voneinander separiert. Jeder Kammer 9a bis 9f sind insgesamt vier in Umfangsrichtung geschlossen angeordnete Reflektorelemente 16 zugeordnet, wobei sich je zwei benachbarte Kammern 9a bis 9f je ein Reflektorelement 16 teilen. Die Reflektorelemente 16 grenzen also jede Kammer 9a bis 9f von der jeweils benachbarten Kammer 9a bis 9f ab und tragen dafür Sorge, dass die Leuchtmittel 13a bis 13f einer Kammer 9a bis 9f nicht das Flächensegment 4a bis 4f einer benachbarten Kammer 9a bis 9f ausleuchten. Neben dieser Segmentierungsfunktion haben die Reflektorelemente 16 die Aufgabe, die beim Betrieb der Leuchtmittel 13a bis 13f entstehende Wärme abzuführen. Hierzu sind die Reflektorelemente 16 wärmeleitend mit den die Leuchtmittel 13a bis 13f tragenden Leiterplatten 14a bis 14f verbunden und zwar über Leiterplattenrahmen 17a bis 17f, die in dem gezeigten Ausführungsbeispiel aus Metall ausgebildet sind. In dem gezeigten Ausführungsbeispiel weisen die Leiterplattenrahmen 17a bis 17f, die die jeweilige Leiterplatte 14a bis 14f tragen, seitliche, abgewinkelte Laschen 18 auf, mit denen die Reflektorelemente 16 verlötet sind. Alternative Befestigungsmöglichkeiten sind denkbar.

Vier jeweils eine Kammer 9a bis 9f begrenzende Reflektorelemente 16 sind trichterartig angeordnet, wobei der Trichter in jeder Ebene eine rechteckige, hier quadratische, Kontur aufweist.

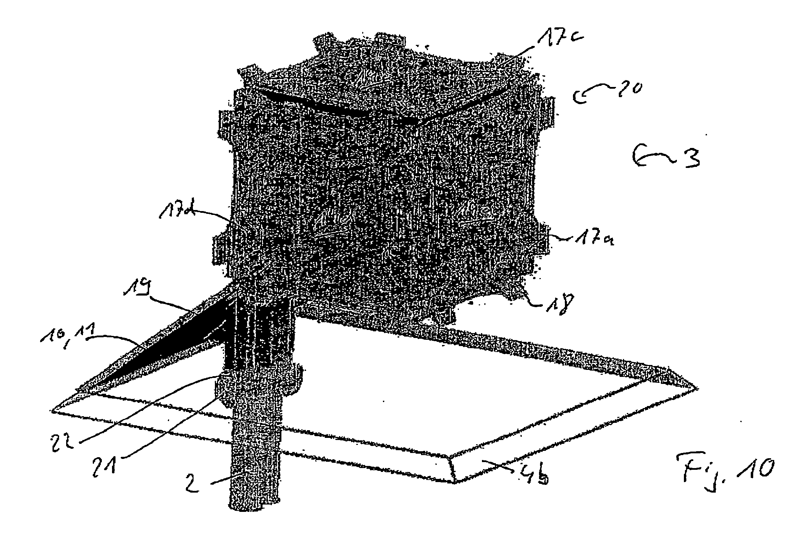

In Fig. 10 sind durch Weglassen der meisten Reflektorelemente weitere Details des Aufbaus eines bevorzugten Leuchtkörpers 3 zu erkennen. Das einzige, dargestellte Reflektorelement 16, das nach unten in Richtung (Träger-) Flächensegment 4b orientiert ist, verbindet den Reflektorelementverbund bzw. die Reflektorelementanordnung über ein am Ständer 2 festgelegtes Adapterelement 19 mit dem metallischen Ständer 2 zwecks Wärmeabführung. An dem Ständer 2 ist über das Adapterelement 19 ein innerer Kubus 20, umfassend die sechs Leiterplatten 14a bis 14f, gehalten. Zu erkennen ist, dass das untere (Träger-) Flächenelement 4a von dem Ständer 2 durchsetzt und sandwichartig zwischen dem Adapterelement 19 und einer, ebenfalls von dem Ständer 2 durchsetzten Klemmplatte 21 aufgenommen ist. Die Klemmplatte 21 ist mit Hilfe von Schrauben 22 mit dem Adapterelement 19 verschraubt und hält so das orthogonal zum Ständer 2 orientierte Flächensegment 4b, welches wiederum die übrigen, nicht gezeigten, einen Aufsatz bildenden Flächensegmente trägt.

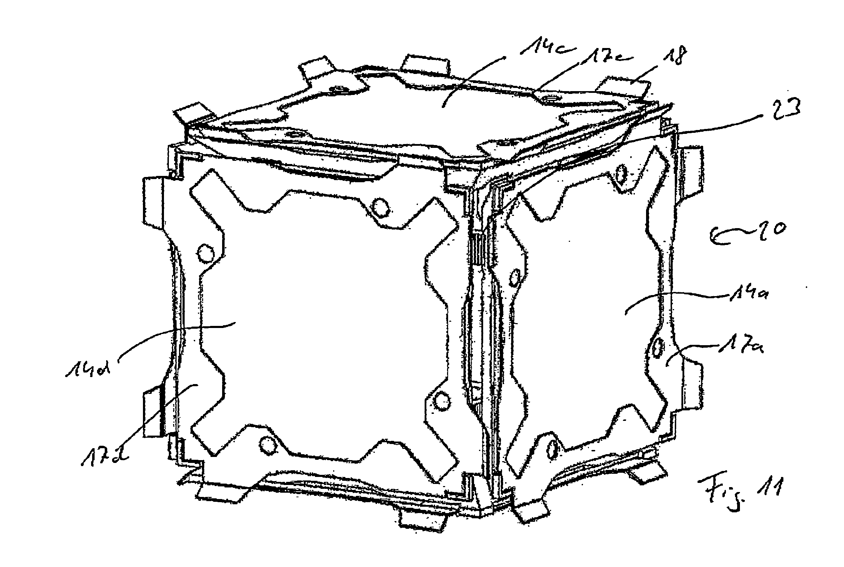

In Fig. 11 ist der innere Kubus 20 gemäß Fig. 10 in Alleinstellung gezeigt. Zu erkennen sind die rechtwinklig zueinander angeordneten Leiterplatten 14a bis 14f, die jeweils an einem metallischen Leiterplattenrahmen 17a bis 17f festgelegt sind, wobei die Leiterplattenrahmen 17a bis 17f an einer Kunststoff-Tragstruktur 23 gehalten sind. Die Kunststoff-Tragstruktur 23 ist deutlich in Fig. 12 zu erkennen. Dort ist zu entnehmen, dass die Tragstruktur 23 von sechs identischen, jeweils als Spritzgussteil ausgebildeten Rahmenteilen 24 gebildet ist, die miteinander verrastet sind.

In Fig. 12 ist stark schematisiert ein Steuermoduscontroller 25 gezeigt, der signalleitend mit den sechs Nahfeldsensoren 12a bis 12f (nicht gezeigt) verbunden ist, wobei der Steuermoduscontroller 25 unterschiedliche Betriebsmodi aktiviert, abhängig davon, welcher der Nahfeldsensoren 12a bis 12f oder welche Nahfeldsensorenkombinationen gleichzeitig oder ggf. zeitlich versetzt aktiviert werden.

### Bezugszeichenliste

- 1: Standleuchte
- 2: Ständer
- 3: Leuchtkörper

- 4a bis 4f: Flächensegment

- 5: Hand
- 6: Stäbe
- 7: Befestigungsmittel
- 8: Schwenkachse

- 9a bis 9f: Kammer

- 10: Seitenwand
- 11: Seitenkante

- 12a bis 12f: Nahfeldsensor

- 13a bis 13f: Leuchtmittel

- 14a bis 14f: Leiterplatten

- 15a bis 15f: Antenne

- 16: Reflektorelement

- 17a bis 17f: Leiterplattenrahmen

- 18: Laschen
- 19: Adapterelement
- 20: Kubus
- 21: Klemmplatte
- 22: Schrauben
- 23: Kunststoff-Tragstruktur
- 24: Rahmenteile
- 25: Steuermoduscontroller

- 110: Leiterplatte

- 112: Ausschnitt

- 114: Hochfrequenz-Leiterplatte
- 115: Drahtbrücke
- 116: Hochfrequenz-Sensoreinheit

- 120: Elektronikbauelement

- 130: Flächenbereich

## Patentansprüche

1. Leuchtmodul mit einer Leiterplatte mit einer Mehrzahl von darauf vorgesehenen Halbleiter-Leuchtmitteln (D1, D2, D3, D4), insbesondere Leistungs-LED's , wobei die Leiterplatte (110) zum Halten und Kontaktieren elektronischer Bauelemente (120) für eine den Halbleiter-Leuchtmitteln vorgeschaltete Treiber- und Steuerelektronik ausgebildet ist,
**dadurch gekennzeichnet,**
**dass** auf oder an der Leiterplatte eine modulartig ausgebildete Hochfrequenz-Sensoreinheit (116) vorgesehen ist,
die Leiterplatte (110) mittig einen zum Ein- oder Aufsetzen der Hochfrequenz-Sensoreinheit (116) bemessenen Flächenbereich (112) aufweist, die Mehrzahl der Halbleiter-Leuchtmittel randseitig und/oder in Eckbereichen auf der Leiterplatte (110) vorgesehen ist und metallisierte Flächenabschnitte (130) der Leiterplatte (110) so mit den Halbleiter-Leuchtmitteln zusammenwirken, dass die Flächenabschnitte als Kühlfläche einen Betriebswärmeabfluss der Halbleiter-Leuchtmittel und an oder auf die die Leiterplatte (110) wärmeleitend kontaktierenden Wärmeleitelemente bewirken.

2. Leuchtmodul nach Anspruch 1,
**dadurch gekennzeichnet, dass**
die Leiterplatte (110) vieleckig, insbesondere rechteckig, mit in Eckbereichen vorgesehenen Halbleiter-Leuchtmitteln ausgebildet ist, wobei die metallisierten Flächenabschnitte (130) randseitig, insbesondere randseitig umlaufend, ausgebildet sind.

3. Leuchtmodul nach Anspruch 1 oder 2,
**dadurch gekennzeichnet, dass**
die großflächig ausgebildeten metallisierten Flächenabschnitte sich zumindest abschnittsweise von einem betreffenden Leiterplattenrand bis zum Flächenbereich bzw. Durchbruch (112) der Sensoreinheit (116) erstrecken.

4. Leuchtmodul nach einem der Ansprüche 1 bis 3,
**gekennzeichnet durch**
mindestens ein flächiges Reflektorelement, das als Wärmeleitelement mit einem der metallisierten Flächenabschnitte wärmeleitend verbunden ist und als Blende oder Reflektor für mindestens eines der Halbleiter-Leuchtmittel ausgebildet ist.

5. Leuchtmodul nach Anspruch 4,
**dadurch gekennzeichnet, dass**
eine Mehrzahl der flächigen Reflektorelemente entlang des vieleckig, insbesondere rechteckig, ausgebildeten Umfangs der Leiterplatte (110) zum Realisieren eines Leuchtkörpers oder Leuchtkörpereinsatzes vorgesehen ist.

6. Leuchtmodul nach Anspruch 4 oder 5,
**gekennzeichnet durch**
eine einer Mehrzahl von Reflektorelementen zugeordnete, für eine Lichtemission der Halbleiter-Leuchtmittel sowie für ein Hochfrequenz-Sensorsignal der Hochfrequenz-Sensoreinheit (116) durchlässige Scheibe, die parallel zur Leiterplatte (110) gehalten ist und einen von der Leiterplatte (110) und der Mehrzahl der Reflektorelemente gebildeten Innenraum abdeckt oder verschließt.

7. Leuchtmodul nach einem der Ansprüche 4 bis 6,
**dadurch gekennzeichnet, dass**
eines einer Mehrzahl der Reflektorelemente mit Mitteln zur Wärmeableitung, mit insbesondere einem Fuß oder Ständer eines zugeordneten Gehäuses, thermisch leitend verbunden ist.

8. Leuchtmodul nach einem der Ansprüche 1 bis 7,
**dadurch gekennzeichnet, dass**
die elektronischen Bauelemente (120) der Treiber- bzw. Schaltelektronik dem Flächenbereich bzw. Durchbruch für die Sensoreinheit (116) benachbart mittig und/oder zentral auf der Leiterplatte (110) so vorgesehen sind, dass randseitig der rechteckigen Leiterplatte eine zumindest abschnittsweise ununterbrochene, von den elektronischen Bauelementen (120) freie Kühlfläche entsteht.

9. Leuchtmodul nach Anspruch 8,
**dadurch gekennzeichnet, dass**
die ununterbrochene Kühlfläche so ausgebildet ist, dass entlang mindestens eines Randes ein ununterbrochener, von den elektronischen Bauelementen (120) freier Streifen entsteht, dessen Breite (R) größer als 10%, bevorzugt größer als 15%, weiter bevorzugt größer als 20%, einer Erstreckung (E) der Leiterplatte (110) in der Richtung der Breite ist.

10. Leuchtmodul nach Anspruch 8 oder 9,
**dadurch gekennzeichnet, dass**
die ununterbrochene Kühlfläche so ausgebildet ist, dass entlang mindestens eines Randes ein ununterbrochener, von den elektronischen Bauelementen (120) freier Streifen (R) entsteht, der mindestens der halben Breite eines Abstands vom betreffenden Rand zum Flächenbereich bzw. Durchbruch der Sensoreinheit (116) entspricht.

11. Leuchtmodul nach einem der Ansprüche 1 bis 10,
**dadurch kennzeichnet, dass**
die Hochfrequenz-Sensoreinheit (116) thermisch entkoppelt an oder in der Leiterplatte (110) befestigt ist und mit dieser ein Sensorleuchtenmodul ausbildet.

12. Leuchtmodul nach einem der Ansprüche 1 bis 11,
**dadurch gekennzeichnet, dass**
die an der Leiterplatte (110) vorgesehene Hochfrequenz-Sensoreinheit (116) zum Ein- und Ausschalten der Mehrzahl der Halbleiter-Leuchtmittel, ausgebildet ist.

## Claims

1. A lighting module with a printed circuit board fitted with a plurality of semi-conductor lamps (D1, D2, D3, D4), in particular performance LEDs, wherein the printed circuit board (110) is designed for holding and contacting electronic components (120) for a driver and control electronics upstream of the semi-conductor lamps, **characterised in that** a modularly designed high-frequency sensor unit (116) is provided on or at the printed circuit board, the printed circuit board (110) comprises a central surface area (112) dimensioned for inserting or positioning a high-frequency sensor unit (116), the majority of the semi-conductor lamps is arranged along the edges and/or in the corner areas of the printed circuit board (110), and metallised surface sections (130) of the printed circuit board (110) interact with the semi-conductor lamps such that the surface sections, as a cooling surface, cause a dissipation of process heat from the semi-conductor lamps and onto the heat conducting elements contacting the circuit board (110) in a heat-conducting manner.

2. The lighting module according to claim 1, **characterised in that** the printed circuit board (110) is designed as a polygon, in particular a square, with semi-conductor lamps provided in the corner areas, wherein the metallised surface sections (130) are arranged at the edges, in particular all around the edges.

3. The lighting module according to claim 1 or 2 **characterised in that** the large-area metallised surface sections extend, at least in sections, from a relevant circuit board edge up to the surface area or breakthrough (112) of the sensor unit (116).

4. The lighting module according to one of claims 1 to 3, **characterised by** at least one flat reflector element, which as a heat-conducting element is connected with one of the metallised surface sections in a heat-conducting manner, and which is designed as a blind or reflector for at least one of the semi-conductor lamps.

5. The lighting module according to claim 4, **characterised in that** a plurality of the flat reflector elements is arranged along the polygonal, in particular square-shaped, circumference of the printed circuit board (110) for realising a luminary or luminary insert.

6. The lighting module according to claims 4 or 5, **characterised by** a pane associated with a plurality of reflector elements and permeable to a light emission from the semi-conductor lamps as well as to a high-frequency sensor signal of the high-frequency sensor unit (116), which pane is held in parallel to the printed circuit board (110) and which covers or seals an interior space formed by the printed circuit board (110) and the plurality of reflector elements.

7. The lighting module according to one of claims 4 to 6, **characterised in that** one of a plurality of the reflector elements is connected with means for conducting heat, in particular with a foot or stand of an associated housing, in a thermally conductive manner.

8. The lighting module according to one of claims 1 to 7, **characterised in that** the electronic components (120) of the driver or switching electronics are provided adjacent to the surface area or breakthrough for the sensor unit (116) in the middle of and/or centrally on the printed circuit board (110), in such a way that an uninterrupted cooling surface, at least in sections, is created at the edge of the square circuit board which is free from the electronic components (120).

9. The lighting module according to claim 8, **characterised in that** the uninterrupted cooling surface is configured in such a way that along at least one edge an uninterrupted strip free from electronic-components (120) is created, the width (R) of which is greater than 10%, preferably greater than 15%, most preferably greater than 20%, of an extent (E) of the circuit board (110) in direction of the width.

10. The lighting module according to claim 8 or 9, **characterised in that** the uninterrupted cooling surface is configured in such a way that along at least one edge an uninterrupted strip free (R) from electronic-components (120) is created, which is at least half the width of a distance from the relevant edge to the surface area or breakthrough for the sensor unit (116).

11. The lighting module according to one of claims 1 to 10, **characterised in that** the high-frequency sensor unit (116) is fixed, thermally decoupled, to or in the printed circuit board (110) and together with this forms a sensor lighting module.

12. The lighting module according to one of claims 1 to 11, **characterised in that** the high-frequency sensor unit (116) provided on the circuit board (110) is configured to turn the plurality of semi-conductor lamps on and off.

## Revendications

1. Module d'éclairage comportant une carte de circuit munie d'une pluralité de moyens d'éclairage à semi-conducteurs (D1, D2, D3, D4), notamment des LED de puissance, dans lequel la carte de circuit (110) est conçue pour maintenir et mettre en contact des composants électroniques (120) destinés à une électronique de pilotage et de commande connectée en amont des moyens d'éclairage à semi-conducteurs,
**caractérisé en ce qu'**il est prévu une unité de détection à haute fréquence (116) réalisée de manière modulaire,
**en ce que** la carte de circuit (110) présente en son milieu une zone plane (112) dimensionnée de manière à monter ou démonter l'unité de détection à haute fréquence (116),
**en ce que** la pluralité de moyens d'éclairage à semi-conducteurs est prévue sur le bord et/ou dans des régions d'angle sur la carte de circuit (110) et **en ce que** des sections de surface métallisées (130) de la carte de circuit (110) coopèrent avec les moyens d'éclairage à semi-conducteurs de manière à ce que la section de surface provoque, en tant que surface de refroidissement, une évacuation de la chaleur de fonctionnement des moyens d'éclairage à semi-conducteurs et d'éléments conducteurs de chaleur en contact thermiquement conducteur avec ou sur la carte de circuit (110).

2. Module d'éclairage selon la revendication 1, **caractérisé en ce que**
la carte de circuit (110) est réalisée de façon polygonale, notamment rectangulaire, avec des moyens d'éclairage à semi-conducteurs prévus dans les régions d'angle, dans lequel les sections de surface métallisées (130) sont réalisées sur les bords, notamment sur les bords périphériques.

3. Module d'éclairage selon la revendication 1 ou 2,
**caractérisé en ce que** les sections de surface métallisées réalisées de manière à présenter des surfaces importantes s'étendent au moins par sections d'un bord de la carte de circuit en question jusqu'à une région de surface ou une traversée (112) de l'unité de détection (116).

4. Module d'éclairage selon l'une quelconque des revendications 1 à 3,
**caractérisé par** au moins un élément réflecteur plan qui est relié de manière thermiquement conductrice, en tant qu'élément thermiquement conducteur, à une section de surface métallisée et en ce qu'il est réalisé sous la forme d'un diaphragme ou d'un réflecteur pour au moins l'un des moyens d'éclairage à semi-conducteurs.

5. Module d'éclairage selon la revendication 4, **caractérisé en ce qu'**il est prévu une pluralité d'éléments réflecteurs plans le long du pourtour réalisé de manière polygonale, notamment rectangulaire, de la carte de circuit (110) afin de réaliser un corps lumineux ou un insert de corps lumineux.

6. Module d'éclairage selon la revendication 4 ou 5,
**caractérisé par** une plaque associée à une pluralité d'éléments réflecteurs, qui est transparente à une émission lumineuse des moyens d'éclairage à semi-conducteurs ainsi qu'à un signal de capteur à haute fréquence de l'unité de détection à haute fréquence (116), laquelle plaque est maintenue parallèle à la carte de circuit (110) et recouvre ou referme un espace intérieur formé par la carte de circuit (110) et la pluralité d'éléments réflecteurs.

7. Module d'éclairage selon l'une quelconque des revendications 4 à 6,
**caractérisé en ce que** l'un d'une pluralité des éléments réflecteurs est relié de manière thermiquement conductrice à des moyens de conduction thermique, notamment à un pied ou à un socle d'un boîtier associé.

8. Module d'éclairage selon l'une quelconque des revendications 1 à 7,
**caractérisé en ce que** les composants électroniques (120) de l'électronique d'attaque ou de commutation sont prévus dans la région de surface ou la traversée destinée à l'unité de détection (116) au voisinage du milieu et/ou centralement sur la carte de circuit (110) de manière à ce que, sur le bord de la carte de circuit rectangulaire, il apparaisse au moins par sections une surface de refroidissement ininterrompue dépourvue des composants électroniques (120).

9. Module d'éclairage selon la revendication 8, **caractérisé en ce que** la surface de refroidissement ininterrompue est réalisée de manière à ce que, le long d'au moins un bord, il apparaisse une bande ininterrompue dépourvue des composants électroniques (120), dont la largeur (R) est supérieure à 10 %, et de préférence, à 15 %, et mieux encore, à 20 % d'une étendue (E) de la carte de circuit (110) dans la direction de la largeur.

10. Module d'éclairage selon la revendication 8 ou 9,
**caractérisé en ce que** la surface de refroidissement ininterrompue est réalisée de manière à ce que, le long d'au moins un bord, il apparaisse une bande (R) ininterrompue dépourvue des composants électroniques (120), qui correspond à au moins la moitié de la largeur d'un espacement entre le bord en question et la région de surface ou la traversée de l'unité de détection (116).

11. Module d'éclairage selon l'une quelconque des revendications 1 à 10,
**caractérisé en ce que** l'unité de détection à haute fréquence (116) est fixée de manière thermiquement découplée à ou dans la carte de circuit (110) et **en ce qu'**elle forme avec celles-ci un module d'éclairage à capteur.

12. Module d'éclairage selon l'une quelconque des revendications 1 à 11,
**caractérisé en ce que** l'unité de détection à haute fréquence (116) prévue sur la carte de circuit (110) est conçue pour activer et désactiver la pluralité de moyens d'éclairage à semi-conducteurs.
